# EUROPÄISCHE PATENTSCHRIFT

(11) **EP 3 825 550 B1**
(45) Veröffentlichungstag und Bekanntmachung des Hinweises auf die Patenterteilung: **23.08.2023**
(21) Anmeldenummer: 20206880.5
(22) Anmeldetag: 11.11.2020
(51) Int. Cl.: F03D 13/20

(54) **TURMSEGMENT UND HERSTELLUNGSVERFAHREN**
TOWER SEGMENT AND METHOD OF MANUFACTURING SAME
SEGMENT DE TOUR ET PROCÉDÉ DE FABRICATION

(30) Priorität: 21.11.2019 DE 102019131515
(43) Veröffentlichungstag der Anmeldung: 26.05.2021
(73) Patentinhaber: Wobben Properties GmbH, 26607 Aurich (DE)
(72) Erfinder: Longeru, Markus, 21684 Stade (DE); Pubanz, Andre, 3818 GL Amersfoort (NL); Waaijenberg, Albert, 3772JM Barneveld (NL); Lagerweji, Henk, 3774CT Kootwijkerbroek (NL); van de Pol, Aart, 6731EJ Otterlo (NL)
(74) Vertreter: Eisenführ Speiser

(56) Entgegenhaltungen:
- EP-A1- 2 615 226
- EP-A1- 2 913 521
- CN-U- 202 380 931
- DE-T5-112011 101 733

## Beschreibung

Die Erfindung betrifft ein Turmsegment, einen Turm einer Windenergieanlage, eine Windenergieanlage und ein Verfahren zur Herstellung eines Turmsegments.

Windenergieanlagen sind grundsätzlich bekannt. Sie erzeugen elektrische Leistung aus Wind. Moderne Windenergieanlagen betreffen in der Regel sogenannte Horizontalachsen-Windenergieanlagen, bei denen die Rotorachse im Wesentlichen horizontal angeordnet ist und die Rotorblätter eine im Wesentlichen senkrechte Rotorfläche überstreichen. Windenergieanlagen umfassen neben einem an einer Gondel angeordneten Rotor in der Regel einen Turm auf dem die Gondel mit dem Rotor um eine im Wesentlichen vertikal ausgerichtete Achse drehbar angeordnet ist. Der Rotor umfasst in der Regel drei gleichlange Rotorblätter.

Türme sind in der Regel schlanke Bauwerke mit einer großen Höhe, die insbesondere orthogonal zu dieser Höhe eine vergleichsweise geringe Erstreckung aufweisen. Türme werden häufig aus Beton und/oder aus Stahl hergestellt. Die geläufigsten Arten von Türmen für Windenergieanlagen betreffen in der Regel Betonrohrtürme oder Stahlrohrtürme. Üblicherweise sind diese Rohrtürme in vertikaler Richtung und/oder auch in horizontaler Umfangsrichtung segmentiert. Innerhalb der Türme für Windenergieanlagen sind im Allgemeinen technische Einrichtungen angeordnet. Technische Einrichtungen können beispielsweise Montagebühnen, Kabelstränge oder Leitern sein.

Türme für Windenergieanlagen weisen in der Regel eine Tür auf, durch die ein Bediener hindurchtreten kann, um das Innere des Turmes zu betreten. Für eine solche Tür wird 20eine Aussparung in dem Turm vorgesehen. Eine Aussparung in einem Turm stellt eine strukturelle Schwachstelle dar. Insbesondere die Spannungen um die Aussparung herum können beträchtliche Werte aufweisen. Üblicherweise wird ein bis zu 100 mm dicker Stahlstreifen als Türzarge in die Aussparung eingeschweißt. Eine solche Türzarge ist mit hohen Kosten verbunden, und darüber hinaus ist für das Einsetzen und auch das Zurechtbiegen dieses Stahlstreifens ein hoher Arbeitsaufwand erforderlich. Das Einschweißen des Stahlstreifens beeinflusst das an die Aussparung angrenzende Turmmaterial thermisch negativ. Beispiele eines Turms einer Windenergieanlage mit einer Aussparung für eine Tür sind offenbart in DE 112011101733 T5, EP 2913521 A1 und EP 2615226 A1.

Es ist daher eine Aufgabe der vorliegenden Erfindung, ein Turmsegment, einen Turm einer Windenergieanlage, eine Windenergieanlage und ein Verfahren zur Herstellung eines Turmsegments bereitzustellen, die einen oder mehrere der genannten Nachteile vermindern oder beseitigen. Es ist insbesondere eine Aufgabe der vorliegenden Erfindung, eine Lösung bereitzustellen, die bessere Eigenschaften bezüglich der Lebensdauer eines Turmes einer Windenergieanlage im Bereich einer Aussparung für eine Tür bereitstellt. Gemäß einem ersten Aspekt wird die Aufgabe gelöst durch ein Turmsegment nach Anspruch 1. Hierzu ist ein Turmsegment, insbesondere für einen Turm einer Windenergieanlage, vorgesehen, umfassend ein Mantelsegment mit einer inneren Mantelfläche, einer äußeren Mantelfläche und einer Aussparung für eine Tür, wobei die innere Mantelfläche einen inneren Verstärkungsabschnitt und/oder die äußere Mantelfläche einen äußeren Verstärkungsabschnitt aufweist, wobei der innere Verstärkungsabschnitt und/oder der äußere Verstärkungsabschnitt an die Aussparung angrenzt bzw. angrenzen, und der innere Verstärkungsabschnitt ein inneres Verstärkungsblech aufweist und/oder der äußere Verstärkungsabschnitt ein äußeres Verstärkungsblech aufweist.

Ferner ist zur Lösung der Aufgabe vorgesehen, dass ein Blechmittenabschnitt des inneren Verstärkungsblechs und/oderdes äußeren Verstärkungsblechs mindestens einen mittleren Auskragabschnitt aufweist, wobei der mindestens eine mittlere Auskragabschnitt umgebogen ist und sich von dem Mantelsegment hinweg erstreckt.

Der Erfindung liegt die Erkenntnis zugrunde, dass eine Türzarge für eine Tür in einem Turmsegment für einen Turm einer Windenergieanlage nicht erforderlich ist, wenn im Umfeld der Aussparung für die Tür ein Verstärkungsblech angeordnet wird. Besonders vorteilhaft ist es, wenn an der inneren Mantelfläche ein inneres Verstärkungsblech und an der äußeren Mantelfläche ein äußeres Verstärkungsblech angeordnet wird. Durch das innere Verstärkungsblech und/oder das äußere Verstärkungsblech kann der Spannungsverlauf im Bereich angrenzend an die Aussparung in vorteilhafter Weise beeinflusst werden.

Die Erfinder haben herausgefunden, dass durch die Anordnung des inneren Verstärkungsblechs und/oder des äußeren Verstärkungsblechs angrenzend an die Aussparung für die Tür eine ausreichende Festigkeit sowie eine ausreichende bzw. verbesserte Lebensdauer des Bauteils ermöglicht wird. Eine Türzarge ist somit nicht erforderlich. Dadurch wird Material eingespart und der schweißtechnische Arbeitsaufwand zum Einsetzen der Türzarge entfällt. Darüber hinaus wird der durch das Schweißen bedingte Einfluss auf das Mantelsegment vermieden, sodass eine Schwächung des Mantelsegments vermieden wird.

Das Mantelsegment weist die innere Mantelfläche und die äußere Mantelfläche auf. Das Mantelsegment kann beispielsweise ringförmig ausgebildet sein. Ein ringförmiges Mantelsegment zeichnet sich insbesondere dadurch aus, dass dieses orthogonal zu einer Turmlängsachse einen im Wesentlichen ringförmigen Querschnitt aufweist. Unter einem ringförmigen Querschnitt werden neben einem Ring auch ähnliche Geometrien verstanden, wobei dieser insbesondere ein polygonaler Querschnitt oder auch ein ovaler Querschnitt sein kann.

Das Mantelsegment erstreckt sich somit vorzugsweise in radialer Richtung und in axialer Richtung, wobei die axiale Richtung im bestimmungsgemäßen Betrieb des Mantelsegments parallel, insbesondere koaxial, zu einer Längsachse des Turmes ausgerichtet ist. Die radiale Erstreckung des Mantelsegments ist dann orthogonal zu der axialen Richtung ausgerichtet. Die innere Mantelfläche ist die Fläche des Mantelsegments, die im bestimmungsgemäßen Betrieb des Turmsegments einem Turminneren zugewandt ist. Die äußere Mantelfläche ist der inneren Mantelfläche gegenüberliegend angeordnet. Dies bedeutet insbesondere, dass diese im bestimmungsgemäßen Betrieb des Turmsegments dem Turminneren abgewandt ist.

Das Mantelsegment weist darüber hinaus die Aussparung für die Tür auf. Die Aussparung ist insbesondere als eine Durchtrittsöffnung zu verstehen, durch die eine Person durch das Mantelsegment hindurchtreten kann. Im bestimmungsgemäßen Betrieb des Turmsegments bedeutet dies insbesondere, dass eine Person von außen in das Innere des Turmes durch die Aussparung gelangen kann. Die Aussparung kann beispielsweise auch als Wanddurchführung von z.B. Lüftungs- oder Kühlmittelschläuchen genutzt werden.

Die innere Mantelfläche weist den inneren Verstärkungsabschnitt und/oder die äußere Mantelfläche weist den äußeren Verstärkungsabschnitt auf. Der innere Verstärkungsabschnitt und der äußere Verstärkungsabschnitt sind insbesondere als Bereiche des Mantelsegments zu verstehen, nämlich solche Bereiche, die an die Aussparung angrenzen.

Der innere Verstärkungsabschnitt weist das innere Verstärkungsblech und/oder der äußere Verstärkungsabschnitt weist das äußere Verstärkungsblech auf. Dies bedeutet insbesondere, dass im inneren Verstärkungsabschnitt das innere Verstärkungsblech angeordnet ist und/oder dass im äußeren Verstärkungsabschnitt das äußere Verstärkungsblech angeordnet ist. Das innere Verstärkungsblech und/oder das äußere Verstärkungsblech können an die Aussparung angrenzen und vorzugsweise bündig mit dieser abschließen, oder können auch beabstandet von der Aussparung angeordnet sein.

Das Mantelsegment kann auch ein unterteiltes Mantelsegment sein. Beispielsweise kann das Mantelsegment in axialer Richtung unterteilt sein, sodass eine horizontale Fuge entsteht. Die Fuge der zwei übereinander angeordneten Mantelsegmentteile kann darüber hinaus auch an die Aussparung angrenzen. Darüber hinaus kann das Mantelsegment auch in Umfangsrichtung zwei oder mehr Mantelsegmentteile aufweisen.

Es ist insbesondere bevorzugt, dass das Turmsegment aus Metall besteht oder dieses umfasst, wobei vorzugsweise das Metall Stahl ist. Darüber hinaus ist es bevorzugt, dass das innere Verstärkungsblech und/oder das äußere Verstärkungsblech Metall umfasst, oder aus diesem besteht, wobei vorzugsweise das Metall Stahl ist.

In einer bevorzugten Ausführungsvariante des Turmsegments ist vorgesehen, dass das innere Verstärkungsblech und/oder das äußere Verstärkungsblech die Aussparung im Wesentlichen vollständig umgibt bzw. umgeben, und/oder eine innere Kontur und/oder eine äußere Kontur des inneren Verstärkungsblechs und/oder des äußeren Verstärkungsblechs im Wesentlichen der Geometrie der Aussparung entspricht bzw. entsprechen.

Im Wesentlichen vollständig kann beispielsweise bedeuten, dass sich das Verstärkungsblech ringförmig, ovalförmig und/oder rennbahnförmig um die Aussparung herum vollständig erstreckt. Darüber hinaus kann im Wesentlichen vollständig auch bedeuten, dass das innere Verstärkungsblech und/oder das äußere Verstärkungsblech Brüche aufweist. Darüber hinaus weisen das innere Verstärkungsblech und/oder das äußere Verstärkungsblech eine Aussparung auf, sodass das innere und/oder das äußere Verstärkungsblech um die Aussparung herum angeordnet werden kann.

Es ist bevorzugt, dass die äußere Kontur und/oder die innere Kontur der Geometrie der Aussparung entspricht. Wenn das innere Verstärkungsblech und/oder das äußere Verstärkungsblech bündig mit der Aussparung abschließt bzw. abschließen, entspricht die innere Kontur im Wesentlichen der Geometrie der Aussparung. Die äußere Kontur kann dann ebenfalls der Geometrie der Aussparung entsprechen, wobei diese Kontur größere Abmessungen aufweist.

Darüber hinaus kann die äußere Kontur des inneren Verstärkungsblechs und/oder des äußeren Verstärkungsblechs gestreckt gegenüber der Geometrie der Aussparung sein, beispielsweise in axialer Richtung des Mantelsegments oder auch in Umfangsrichtung. Gerade die Streckung in axialer Richtung führt zu einem inneren Verstärkungsblech und/oder zu einem äußeren Verstärkungsblech, das an seinen Enden jeweils sichelförmige Kontur aufweist.

Gemäß einer weiteren bevorzugten Ausführungsvariante ist vorgesehen, dass das innere Verstärkungsblech und/oder das äußere Verstärkungsblech mit dem Mantelsegment verbunden, insbesondere verschraubt, ist bzw. sind, und vorzugsweise das Mantelsegment, das innere Verstärkungsblech und das äußere Verstärkungsblech eine Vielzahl an Durchgängen mit gemeinsamer Durchgangsachse aufweisen und sich Befestigungselemente, insbesondere Schrauben, durch diese Durchgänge hindurch erstrecken.

Die Schrauben können beispielsweise mit Muttern gesichert sein. Vorzugsweise ist das innere Verstärkungsblech und/oder das äußere Verstärkungsblech mit einer Vielzahl an Befestigungselementen, insbesondere Schrauben, an dem Mantelsegment befestigt. Um eine vorteilhafte Versteifung der Aussparung zu erreichen, ist es vorgesehen, dass die Schrauben entlang des inneren Verstärkungsabschnitts und/oder entlang des äußeren Verstärkungsabschnitts angeordnet sind.

Eine weitere bevorzugte Fortbildung des Turmsegments zeichnet sich dadurch aus, dass in einem oberen Blechabschnitt des inneren Verstärkungsblechs und/oder des äußeren Verstärkungsblechs über der Aussparung und/oder in einem unteren Blechabschnitt des inneren Verstärkungsblechs und/oder des äußeren Verstärkungsblechs unter der Aussparung ein erster Schraubenbereich mit zwei oder mehr Schrauben und ein zweiter Schraubenbereich mit zwei oder mehr Schrauben vorgesehen ist, und vorzugsweise die Schrauben im ersten Schraubenbereich im Wesentlichen sichelförmig und/oder die Schrauben im zweiten Schraubenbereich kreisförmig angeordnet sind.

In einem oberen Blechabschnitt des inneren Verstärkungsblechs über der Aussparung bedeutet insbesondere, dass im bestimmungsgemäßen Betrieb des Turmsegments dieser obere Blechabschnitt in vertikaler Richtung über der Aussparung angeordnet ist. Analog hierzu, bedeutet in einem oberen Blechabschnitt des äußeren Verstärkungsblechs über der Aussparung die entsprechend gleiche Definition. In einem unteren Blechabschnitt des inneren Verstärkungsblechs und/oder in einem unteren Blechabschnitt des äußeren Verstärkungsblechs jeweils unter der Aussparung bedeutet, dass diese Blechabschnitte im bestimmungsgemäßen Betrieb des Turmsegments in vertikaler Richtung unter der Aussparung angeordnet sind. Insbesondere an einer oberen Kante des oberen Blechabschnitts, die der Aussparung abgewandt ist, sind hierin angrenzend vorzugsweise der erste Schraubenbereich angeordnet, in dem die Schrauben kreissegmentförmig angeordnet sind. Kreissegmentförmig kann beispielsweise halbkreisförmig bedeuten.

In einem Bereich zwischen dieser oberen Kante und der Aussparung ist vorzugsweise der zweite Schraubenbereich angeordnet, in dem die Schrauben kreisförmig zueinander angeordnet sind. Kreisförmig kann jeweils auch bedeuten, dass die Schrauben in einem Dreieck, in einem Viereck, oder in einem Polygon angeordnet sind. Eine derartige Befestigung mit einem ersten Schraubenbereich und einem zweiten Schraubenbereich führt zu einer vorteilhaften Versteifung der Aussparung.

In einer weiteren bevorzugten Ausführungsvariante ist vorgesehen, dass das innere Verstärkungsblech und/oder das äußere Verstärkungsblech derart an die Aussparung angrenzt bzw. angrenzen, dass das innere Verstärkungsblech und/oder das äußere Verstärkungsblech im Wesentlichen bündig mit dem Mantelsegment abschließt bzw. abschließen.

In dieser Ausführungsvariante ist die innere Blechaussparung des inneren Verstärkungsblechs und/oder des äußeren Verstärkungsblechs im Wesentlichen gleich der Geometrie der Aussparung, sodass die innere Kontur im Wesentlichen der Geometrie der Aussparung entspricht. Dadurch wird eine Verdickung der Aussparung in radialer Richtung des Turmsegments erzeugt, sodass in vorteilhafter Weise eine bessere Verteilung der Kräfte um die Aussparung herum erzeugt wird und darüber hinaus in vorteilhafter Weise eine Tür angeordnet werden kann.

Ferner ist zur Lösung der Aufgabe vorgesehen, dass die Aussparung einen konvexen oberen Aussparungsabschnitt und/oder einen konvexen unteren Aussparungsabschnitt aufweist, und das innere Verstärkungsblech und/oder das äußere Verstärkungsblech einen zu dem konvexen oberen Aussparungsabschnitt korrespondierenden konkaven oberen Blechabschnitt und/oder einen zu dem konvexen unteren Aussparungsabschnitt korrespondierenden konkaven unteren Blechabschnitt aufweist bzw. aufweisen.

Ein konvexer oberer Aussparungsabschnitt kann beispielsweise eine halbkreisförmige Geometrie aufweisen. Analog hierzu kann ein konvexer unterer Aussparungsabschnitt ebenfalls eine halbkreisförmige Geometrie aufweisen. Zwischen dem konvexen oberen Aussparungsabschnitt und dem konvexen unteren Aussparungsabschnitt weist die Aussparung vorzugsweise einen rechteckigen Aussparungsmittenabschnitt auf. Der konvexe obere Aussparungsabschnitt korrespondiert zu dem konkaven oberen Blechabschnitt, sodass beispielsweise das innere Verstärkungsblech mit seinem oberen konvexen Aussparungsabschnitt an den konvexen oberen Aussparungsabschnitt angrenzt. Alternativ kann das innere Verstärkungsblech auch abschnittsweise oder vollständig beabstandet sein von dem konvexen oberen Aussparungsabschnitt. Gleiches gilt für den konvexen unteren Aussparungsabschnitt und die entsprechenden konkaven unteren Blechabschnitte des inneren Verstärkungsblechs und/oder des äußeren Verstärkungsblechs.

In einer weiteren bevorzugten Ausführungsvariante ist vorgesehen, dass der konkave obere Blechabschnitt und/oder der konkave untere Blechabschnitt sichelförmig ausgebildet sind. Ein sichelförmiger Blechabschnitt zeichnet sich durch eine konvexe Seite und eine konkave Seite aus, wobei vorzugsweise diese Seiten parabelförmige Konturen aufweisen.

Ferner ist zur Lösung der Aufgabe vorgesehen, dass die Aussparung einen im Wesentlichen rechteckigen Aussparungsmittenabschnitt aufweist, der vorzugsweise zwischen dem konvexen oberen Aussparungsabschnitt und dem konvexen unteren Aussparungsabschnitt angeordnet ist, und das innere Verstärkungsblech und/oder das äußere Verstärkungsblech einen Blechmittenabschnitt aufweist bzw. aufweisen, wobei der Blechmittenabschnitt an den Aussparungsmittenabschnitt angrenzt.

Insbesondere ist es bevorzugt, dass der Blechmittenabschnitt des inneren Verstärkungsblechs und/oder des äußeren Verstärkungsblechs einen ersten Blechstreifen und einen zweiten Blechstreifen aufweist, die horizontale Beabstandung der zwei Blechstreifen im Wesentlichen der horizontalen Erstreckung der Aussparung entspricht und ihre Enden an zwei voneinander beabstandeten Enden des konvexen oberen Aussparungsabschnitts und des konvexen unteren Aussparungsabschnitts angeordnet sind. Orthogonal zu der axialen Erstreckung des Mantelsegments und orthogonal zu der radialen Erstreckung des Mantelsegments kann bzw. können der Blechstreifen eine Erstreckung von weniger als 60 cm, weniger als 50 cm, weniger als 40 cm, weniger als 30 cm, weniger als 20 cm, oder weniger als 15 cm aufweisen. Insbesondere ist es bevorzugt, dass diese Erstreckung zwischen 30 cm und 60 cm beträgt, wobei es besonders bevorzugt ist, dass diese zwischen 40 cm und 50 cm beträgt.

Eine weitere Fortbildung des Turmsegments kann vorsehen, dass der konkave obere Blechabschnitt des inneren Verstärkungsblechs und/oder des äußeren Verstärkungsblechs mindestens einen ersten oberen Auskragabschnitt und/oder der konkave untere Blechabschnitt des inneren Verstärkungsblechs und/oder des äußeren Verstärkungsblechs mindestens einen ersten unteren Auskragabschnitt aufweist, der vorzugsweise umgebogen ist, wobei sich der erste obere Auskragabschnitt und/oder der erste untere Auskragabschnitt von dem Mantelsegment hinweg erstreckt bzw. erstrecken.

Derartige Auskragabschnitte erhöhen die Stabilität durch das innere Verstärkungsblech und/oder das äußere Verstärkungsblech weiter. Insbesondere im bestimmungsgemäßen Betrieb des Turmsegments resultieren derartige Auskragabschnitte in einer höheren Steifigkeit in vertikaler Richtung. Ferner ist es bevorzugt, dass das Mantelsegment eine Stärke zwischen 30 mm und 60 mm, insbesondere zwischen 45 mm und 55 mm, aufweist, und/oder das Mantelsegment aus Stahl besteht oder Stahl umfasst.

Darüber hinaus ist es bevorzugt, dass das innere Verstärkungsblech und/oder das äußere Verstärkungsblech eine Stärke zwischen 10 mm und 50 mm, vorzugsweise zwischen 20 mm und 45 mm, aufweist.

Das innere Verstärkungsblech kann zwei oder mehrere Abschnitte aufweisen.

Beispielsweise kann das innere Verstärkungsblech den konkaven oberen Blechabschnitt, den konkaven unteren Blechabschnitt sowie die zwei Blechstreifen als separate Elemente aufweisen, die beispielsweise miteinander verschweißt sind. Das äußere Verstärkungsblech kann ebenfalls zwei oder mehrere Abschnitte aufweisen. Beispielsweise kann das äußere Verstärkungsblech den konkaven oberen Blechabschnitt, den konkaven unteren Blechabschnitt sowie die zwei Blechstreifen als separate Elemente aufweisen, die beispielsweise miteinander verschweißt sind.

Darüber hinaus kann es bevorzugt sein, dass das innere Verstärkungsblech einstückig ausgebildet und/oder das äußere Verstärkungsblech einstückig ausgebildet ist, und/oder der konkave obere Blechabschnitt und/oder der konkave untere Blechabschnitt und/oder der Blechmittenabschnitt separate miteinander verbundene Bauteile sind, die vorzugsweise miteinander verschweißt sind.

Gemäß einem weiteren Aspekt wird die eingangs genannte Aufgabe gelöst durch einen Turm einer Windenergieanlage, umfassend ein Turmsegment nach einer der im Vorherigen beschriebenen Ausführungsvarianten.

Gemäß einem weiteren Aspekt wird die eingangs genannte Aufgabe gelöst durch eine Windenergieanlage, umfassend einen Turm nach dem vorherigen Aspekt.

Gemäß einem weiteren Aspekt wird die eingangs genannte Aufgabe gelöst durch ein Verfahren nach Anspruch 13. Zur Lösung der Aufgabe umfasst das Verfahren zur Herstellung eines Turmsegments die Schritte: Bereitstellen eines Mantelsegments mit einer Aussparung für eine Tür, Anordnen eines inneren Verstärkungsblechs in einem inneren Verstärkungsabschnitt einer inneren, einem Turminneren zugewandten Mantelfläche des Mantelsegments und/oder eines äußeren Verstärkungsblechs in einem äußeren Verstärkungsabschnitt einer äußeren, einem Turminneren abgewandten Mantelfläche des Mantelsegments, wobei der innere Verstärkungsabschnitt und/oder der äußere Verstärkungsabschnitt an die Aussparung angrenzen, wobei die Aussparung einen konvexen oberen Aussparungsabschnitt und/oder einen konvexen unteren Aussparungsabschnitt aufweist, und das innere Verstärkungsblech (236) und/oder das äußere Verstärkungsblech einen zu dem konvexen oberen Aussparungsabschnitt korrespondierenden konkaven oberen Blechabschnitt und/oder einen zu dem konvexen unteren Aussparungsabschnitt korrespondierenden konkaven unteren Blechabschnitt aufweist bzw. aufweisen, und die Aussparung einen im Wesentlichen rechteckigen Aussparungsmittenabschnitt aufweist, der vorzugsweise zwischen dem konvexen oberen Aussparungsabschnitt und dem konvexen unteren Aussparungsabschnitt (248) angeordnet ist, und das innere Verstärkungsblech und/oder das äußere Verstärkungsblech einen Blechmittenabschnitt aufweist bzw. aufweisen, wobei der Blechmittenabschnitt an den Aussparungsmittenabschnitt angrenzt, wobei der Blechmittenabschnitt des inneren Verstärkungsblechs und/oderdes äußeren Verstärkungsblechs mindestens einen mittleren Auskragabschnitt aufweist, wobei der mindestens eine mittlere Auskragabschnitt umgebogen ist und sich von dem Mantelsegment hinweg erstreckt.

Das Verfahren und seine möglichen Fortbildungen weisen Merkmale bzw. Verfahrensschritte auf, die sie insbesondere dafür geeignet machen, für ein Turmsegment und seine Fortbildungen verwendet zu werden. Für weitere Vorteile, Ausführungsvarianten und Ausführungsdetails dieser weiteren Aspekte und ihrer möglichen Fortbildungen, wird auch auf die zuvor erfolgte Beschreibung zu den entsprechenden Merkmalen und Fortbildungen des Turmsegments verwiesen.

Bevorzugte Ausführungsbeispiele werden exemplarisch anhand der beiliegenden Figuren erläutert. Es zeigen:
- Figur 1:: eine schematische, dreidimensionale Ansicht einer beispielhaften Ausführungsform einer Windenergieanlage;
- Figur 2:: eine schematische, dreidimensionale Ansicht einer beispielhaften Ausführungsform eines Turmsegments;
- Figur 3:: eine schematische, zweidimensionale Ansicht eines Verstärkungsblechs;
- Figur 4:: eine schematische, dreidimensionale Ansicht eines Mantelsegments;
- Figur 5:: eine weitere schematische, dreidimensionale Ansicht eines Turmsegments;
- Figur 6.: eine weitere schematische, dreidimensionale Ansicht eines Turmsegments;
- Figur 7:: eine schematische, zweidimensionale Detailansicht eines Turmsegments; und
- Figur 8:: eine schematische Ansicht eines Verfahrens.

In den Figuren sind gleiche und im Wesentlichen funktionsgleiche oder -ähnliche Elemente mit den gleichen Bezugszeichen bezeichnet.

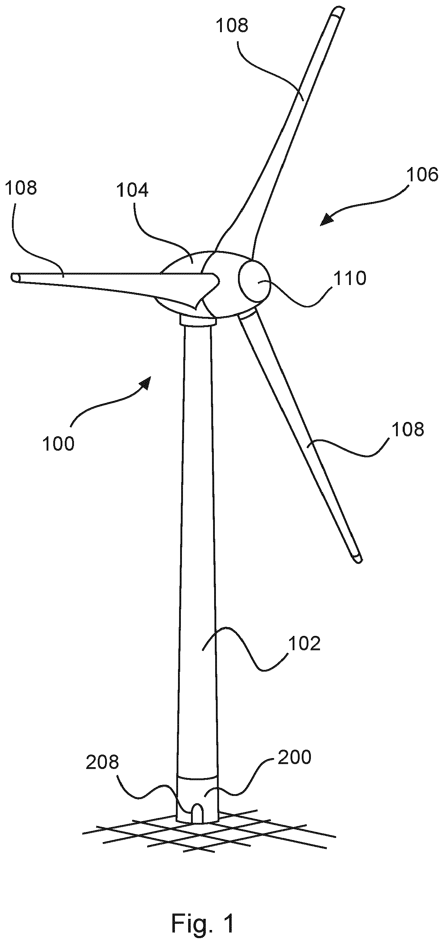

Figur 1 zeigt eine schematische, dreidimensionale Ansicht einer beispielhaften Ausführungsform einer Windenergieanlage 100. Die Windenergieanlage 100 weist einen Turm 102 und eine Gondel 104 auf dem Turm 102 auf. An der Gondel 104 ist ein aerodynamischer Rotor 106 mit Rotorblättern 108 und einem Spinner 110 vorgesehen. Der aerodynamische Rotor 106 wird im Betrieb der Windenergieanlage 100 durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie.

Der Turm 102 umfasst ein Turmsegment 200, umfassend ein Mantelsegment mit einer inneren Mantelfläche, einer äußeren Mantelfläche und einer Aussparung 208 für eine Tür, wobei die innere Mantelfläche einen inneren Verstärkungsabschnitt und die äußere Mantelfläche einen äußeren Verstärkungsabschnitt aufweist, wobei der innere Verstärkungsabschnitt und der äußere Verstärkungsabschnitt an die Aussparung angrenzen, und der innere Verstärkungsabschnitt ein inneres Verstärkungsblech aufweist und der äußere Verstärkungsabschnitt ein äußeres Verstärkungsblech aufweist.

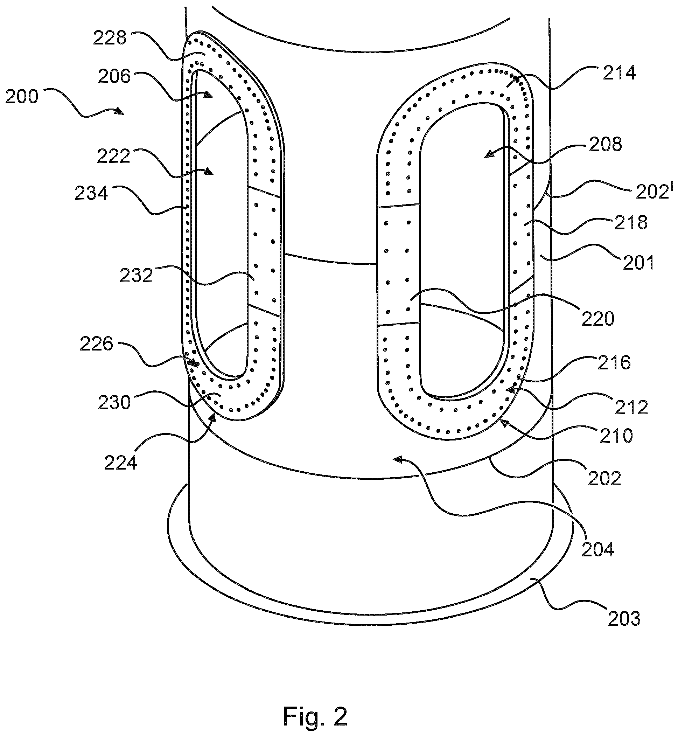

Figur 2 zeigt eine schematische, dreidimensionale Ansicht einer beispielhaften Ausführungsform eines Turmsegments 200. Das Turmsegment 200 grenzt an einen Fundamentflansch 203 an. Das Turmsegment 200 weist ein Mantelsegment 201 auf, wobei dieses Mantelsegment eine äußere Mantelfläche 204 und eine innere Mantelfläche 206 aufweist. Die innere Mantelfläche 206 ist in der vorliegenden Figur durch die Aussparungen 208, 222 ersichtlich. Das Mantelsegment 201 umfasst mehrere Mantelsegmentteile, die an Stoßstellen 202, 202` aneinanderstoßen. Das Mantelsegment 201 weist ferner die erste Aussparung 208 und die zweite Aussparung 222 auf. Es sind auch Mantelsegmente 201 mit lediglich einer Aussparung denkbar. Die Aussparungen 208, 222 sind insbesondere derart angeordnet und ausgebildet, dass diese als Eingang für eine Person in den Innenraum des Mantelsegments 201 dienen können.

Das Mantelsegment 201 weist im Bereich angrenzend an die erste Aussparung 208 einen ersten äußeren Verstärkungsabschnitt 210 auf. In dem ersten äußeren Verstärkungsabschnitt 210 ist ein erstes äußeres Verstärkungsblech 212 angeordnet. Der erste äußere Verstärkungsabschnitt 210 ist insbesondere dadurch gekennzeichnet, dass dieser das erste äußere Verstärkungsblech 212 aufweist.

Das erste äußere Verstärkungsblech 212 umfasst den ersten oberen Blechabschnitt 214, den ersten unteren Blechabschnitt 216 sowie zwei erste äußere Blechmittenabschnitte 218, 220. Der erste obere Blechabschnitt 214 des ersten äußeren Verstärkungsblechs 212 ist angrenzend an einen konvexen oberen Aussparungsabschnitt der Aussparung 208 angeordnet. Der erste untere Blechabschnitt 216 des ersten äußeren Verstärkungsblechs 212 grenzt an einen konvexen unteren Aussparungsabschnitt der Aussparung 208 an. Der erste obere Blechabschnitt 214 und der erste untere Blechabschnitt 216 sind hier vorliegend U-förmig ausgebildet. Die Schenkel der U-förmigen Geometrien sind jeweils mit den Enden der äußeren Blechmittenabschnitten 218, 220 verbunden.

Die zweite Aussparung 222 ist in analoger Weise von einem zweiten äußeren Verstärkungsabschnitt 224 umgeben, in dem ein zweites äußeres Verstärkungsblech 226 angeordnet ist. Das zweite äußere Verstärkungsblech 226 weist einen zweiten oberen Blechabschnitt 228, einen zweiten unteren Blechabschnitt 230 sowie zweite äußere Blechmittenabschnitte 232, 234 auf.

In analoger Weise ist auf der inneren Mantelfläche 206 ebenfalls jeweils ein Verstärkungsabschnitt um die Aussparung 208, 222 herum angeordnet, in dem wiederum ein Verstärkungsblech die Aussparung 208, 222 verstärkt.

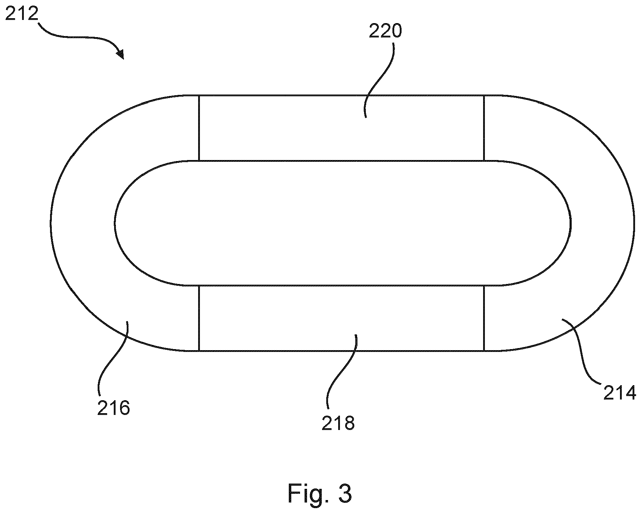

Figur 3 zeigt eine schematische, zweidimensionale Ansicht des Verstärkungsblechs 212, wobei insbesondere die innere Kontur und die äußere Kontur des Verstärkungsblechs 212 dargestellt ist. Das erste äußere Verstärkungsblech 212 weist die parallel angeordneten ersten äußeren Blechmittenabschnitte 218, 220 auf. Die ersten äußeren Blechmittenabschnitte 218, 220 verbinden die Schenkel der U-förmigen, bzw. halbkreisförmigen ersten oberen und unteren Blechabschnitte 214, 216.

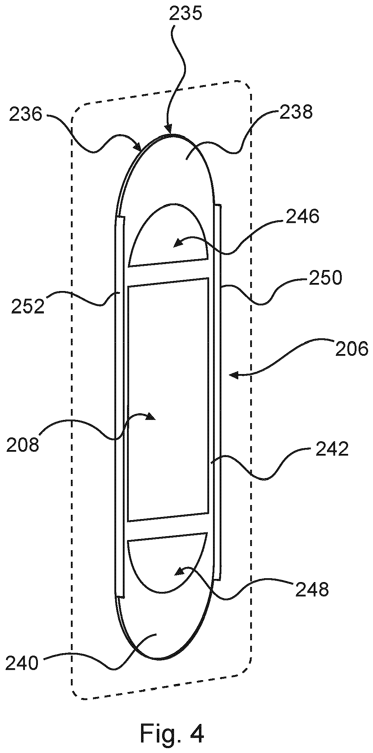

Figur 4 zeigt eine schematische, dreidimensionale Ansicht des Mantelsegments 201. Die innere Mantelfläche 206 weist angrenzend an die erste Aussparung 208 einen inneren Verstärkungsabschnitt 235 auf. In dem inneren Verstärkungsabschnitt 235 ist ein erstes inneres Verstärkungsblech 236 angeordnet. Das erste innere Verstärkungsblech 236 weist ebenfalls einen ersten oberen Blechabschnitt 238, einen ersten unteren Blechabschnitt 240 und zwei erste Blechmittenabschnitte 242, 244 auf.

Die Geometrie des ersten oberen Blechabschnitts 238 und des ersten unteren Blechabschnitt 240 unterscheidet sich von den im Vorherigen beschriebenen äußeren oberen und unteren Blechabschnitten dahingehend, dass dieses vielmehr eine sichelförmige Geometrie aufweist. Der erste obere Blechabschnitt 238 grenzt an einen konvexen oberen Aussparungsabschnitt 246 der Aussparung 208 an. Der erste untere Blechabschnitt 240 grenzt an einen konvexen unteren Aussparungsabschnitt 248 an.

Um die Verstärkungswirkung des ersten inneren Verstärkungsblechs 236 weiter zu steigern, weist dieses einen ersten Auskragabschnitt 250 und einen zweiten Auskragabschnitt 252 auf. Der erste und zweite Auskragabschnitt 250, 252 sind vorzugsweise Teile des ersten inneren Verstärkungsblechs 236, insbesondere des ersten oberen Blechabschnitts 238, des ersten unteren Blechabschnitts 240 und der ersten Blechmittenabschnitte 242, 244, wobei vorzugsweise das Blechmaterial umgebogen wurde.

Die Auskragabschnitte 250, 252 ragen radial nach innen aus. Die Auskragabschnitte 250, 252 erstrecken sich von dem Mantelsegment 201 hinweg. Beispielsweise kann zwischen den Auskragabschnitten 250, 252 und der inneren Mantelfläche 206 ein im Wesentlichen rechter Winkel bestehen. Alternativ kann auch ein von 90° verschiedener Winkel vorgesehen sein, beispielsweise 120°.

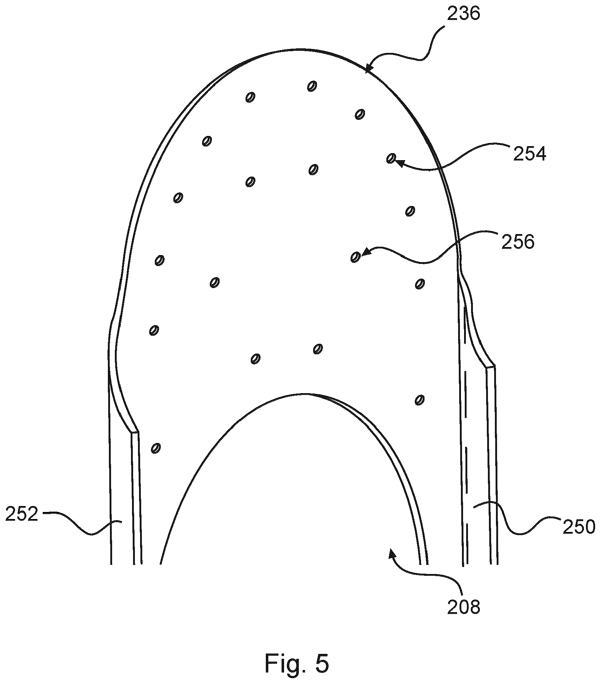

Figur 5 zeigt eine schematische, dreidimensionale Detailansicht des Turmsegments. In dieser Detailansicht des ersten inneren Verstärkungsblechs 236 ist die sichelförmige Kontur bzw. Geometrie des ersten oberen Blechabschnitts 238 dargestellt. Neben den Auskragabschnitten 250, 252 ist insbesondere die Befestigung des ersten inneren Verstärkungsblechs 236 an dem Mantelsegment 201 ersichtlich. Es ist ein erster Schraubenbereich 254 vorgesehen, in dem die Schrauben kreissegmentförmig oder auch sichelförmig angeordnet sind. Darüber hinaus ist in einem zweiten Schraubenbereich 256 eine kreisförmige Anordnung der Schrauben vorgesehen.

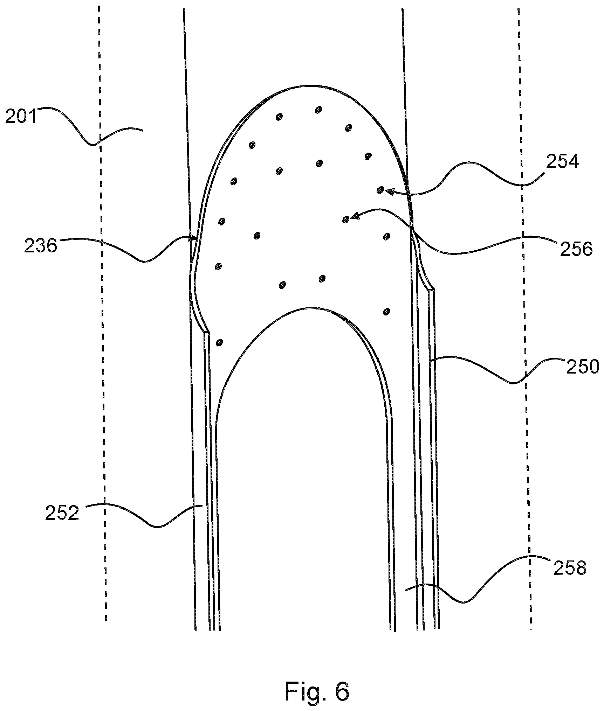

Figur 6 zeigt eine weitere schematische, dreidimensionale Ansicht eines Turmsegments. In der Figur 6 ist insbesondere zu erkennen, dass das Turmsegment neben ringförmigen Turmquerschnitten auch für polygonale Querschnitte vorgesehen sein kann. Das geteilte erste innere Verstärkungsblech 236 weist unter anderem den inneren Blechmittenabschnitt 258 auf.

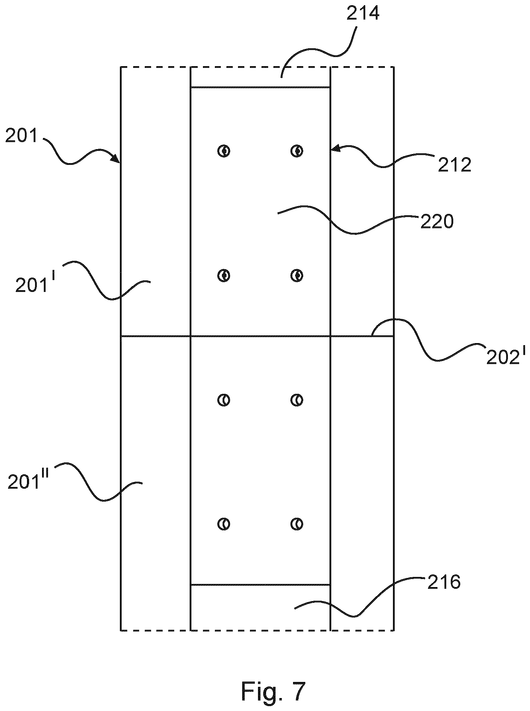

Figur 7 zeigt eine schematische, zweidimensionale Detailansicht eines Turmsegments. An der Stoßstelle 202` stoßen die zwei Mantelsegmentteile 201', 201" aneinander. Der erste äußere Blechmittenabschnitt 220 ist im Bereich der Stoßstelle 202` durchgängig. Dadurch wird eine weitere Versteifung des Turmsegments erzielt.

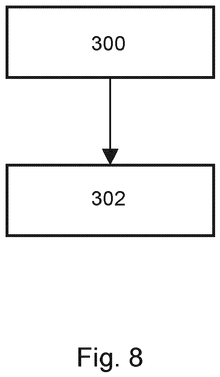

Figur 8 zeigt eine schematische Ansicht eines Verfahrens. In Schritt 300 wird ein Mantelsegment 201 mit einer Aussparung 208, 222 für eine Tür bereitgestellt. Im Schritt 302 erfolgt das Anordnen eines inneren Verstärkungsblechs 236 an einem inneren Verstärkungsabschnitt 235 einer inneren, einem Turminneren zugewandten Mantelfläche 206 des Mantelsegments 201 und eines äußeren Verstärkungsblechs 212, 226 an einem äußeren Verstärkungsabschnitt 210, 224 einer äußeren, einem Turminneren abgewandten Mantelfläche 204 des Mantelsegments 201, wobei der innere Verstärkungsabschnitt 235 und der äußere Verstärkungsabschnitt 210, 224 an die Aussparung 208, 222 angrenzen.

### BEZUGSZEICHEN

- 100: Windenergieanlage
- 102: Turm
- 104: Gondel
- 106: Rotor
- 108: Rotorblätter
- 110: Spinner
- 200: Turmsegment
- 201: Mantelsegment
- 201', 201": Mantelsegmentabschnitte
- 202, 202': Stoßstelle
- 203: Fundamentflansch
- 204: äußere Mantelfläche
- 206: innere Mantelfläche
- 208: erste Aussparung
- 210: erster äußerer Verstärkungsabschnitt
- 212: erstes äußeres Verstärkungsblech
- 214: erster oberer Blechabschnitt
- 216: erster unterer Blechabschnitt
- 218, 220: erste äußere Blechmittenabschnitte
- 222: zweite Aussparung
- 224: zweiter äußerer Verstärkungsabschnitt
- 226: zweites äußeres Verstärkungsblech
- 228: zweiter oberer Blechabschnitt
- 230: zweiter unterer Blechabschnitt
- 232: zweiter äußerer Blechmittenabschnitt
- 234: zweiter äußerer Blechmittenabschnitt
- 235: erster innerer Verstärkungsabschnitt
- 236: erstes inneres Verstärkungsblech
- 238: erster oberer Blechabschnitt
- 240: erster unterer Blechabschnitt
- 242, 244: erste Blechmittenabschnitte
- 246: konvexer oberer Aussparungsabschnitt
- 248: konvexer unterer Aussparungsabschnitt
- 250: erster Auskragabschnitt
- 252: zweiter Auskragabschnitt
- 254: erster Schraubenbereich
- 256: zweiter Schraubenbereich
- 258: innerer Blechmittenabschnitt

## Patentansprüche

1. Turmsegment (200), insbesondere für einen Turm (102) einer Windenergieanlage (100), umfassend
- ein Mantelsegment (201) mit einer inneren Mantelfläche (206), einer äußeren Mantelfläche (204) und einer Aussparung (208, 222) für eine Tür, wobei
- die innere Mantelfläche (206) einen inneren Verstärkungsabschnitt (235) und/oder die äußere Mantelfläche (204) einen äußeren Verstärkungsabschnitt (210, 224) aufweist, wobei der innere Verstärkungsabschnitt (235) und/oder der äußere Verstärkungsabschnitt (210, 224) an die Aussparung (208, 222) angrenzt bzw. angrenzen, und
- der innere Verstärkungsabschnitt (235) ein inneres Verstärkungsblech (236) aufweist und/oder der äußere Verstärkungsabschnitt (210, 224) ein äußeres Verstärkungsblech (212, 226) aufweist, wobei
- die Aussparung (208, 222) einen konvexen oberen Aussparungsabschnitt (246) und/oder einen konvexen unteren Aussparungsabschnitt (248) aufweist, und
- das innere Verstärkungsblech (236) und/oder das äußere Verstärkungsblech (212, 226) einen zu dem konvexen oberen Aussparungsabschnitt (246) korrespondierenden konkaven oberen Blechabschnitt (214, 228, 238) und/oder einen zu dem konvexen unteren Aussparungsabschnitt (248) korrespondierenden konkaven unteren Blechabschnitt (216, 230, 240) aufweist bzw. aufweisen, und
- die Aussparung (208, 222) einen im Wesentlichen rechteckigen Aussparungsmittenabschnitt aufweist, der vorzugsweise zwischen dem konvexen oberen Aussparungsabschnitt (246) und dem konvexen unteren Aussparungsabschnitt (248) angeordnet ist, und
- das innere Verstärkungsblech (236) und/oder das äußere Verstärkungsblech (212, 226) einen Blechmittenabschnitt (218, 220, 232, 234, 242, 244) aufweist bzw. aufweisen, wobei der Blechmittenabschnitt (218, 220, 232, 234, 242, 244) an den Aussparungsmittenabschnitt angrenzt, wobei
- der Blechmittenabschnitt des inneren Verstärkungsblechs (236) und/oder des äußeren Verstärkungsblechs (212, 226) mindestens einen mittleren Auskragabschnitt (250, 252) aufweist, **dadurch gekennzeichnet, dass** der mindestens eine mittlere Auskragabschnitt (250, 252) umgebogen ist und sich von dem Mantelsegment (201) hinweg erstreckt.

2. Turmsegment (200) nach Anspruch 1, wobei
- das innere Verstärkungsblech (236) und/oder das äußere Verstärkungsblech (212, 226) die Aussparung (208, 222) im Wesentlichen vollständig umgibt bzw. umgeben, und/oder
- eine innere Kontur und/oder eine äußere Kontur des inneren Verstärkungsblechs (236) und/oder des äußeren Verstärkungsblechs (212, 226) im Wesentlichen der Geometrie der Aussparung (208, 222) entspricht bzw. entsprechen.

3. Turmsegment (200) nach einem der vorherigen Ansprüche, wobei
- das innere Verstärkungsblech (236) und/oder das äußere Verstärkungsblech (212, 226) mit dem Mantelsegment (201) verbunden, insbesondere verschraubt, ist bzw. sind, und
- vorzugsweise das Mantelsegment (201), das innere Verstärkungsblech (236) und das äußere Verstärkungsblech (212, 226) eine Vielzahl an Durchgängen mit gemeinsamer Durchgangsachse aufweisen und sich Befestigungselemente, insbesondere Schrauben, durch diese Durchgänge hindurch erstrecken.

4. Turmsegment (200) nach einem der vorherigen Ansprüche, wobei
- in einem oberen Blechabschnitt des inneren Verstärkungsblechs (236) und/oder des äußeren Verstärkungsblechs (212, 226) über der Aussparung (208, 222) und/oder in einem unteren Blechabschnitt des inneren Verstärkungsblechs (236) und/oder des äußeren Verstärkungsblechs (212, 226) unter der Aussparung (208, 222) ein erster Schraubenbereich (254) mit zwei oder mehr Schrauben und ein zweiter Schraubenbereich (256) mit zwei oder mehr Schrauben vorgesehen ist, und
- vorzugsweise die Schrauben im ersten Schraubenbereich (254) im Wesentlichen sichelförmig und/oder die Schrauben im zweiten Schraubenbereich (256) kreisförmig angeordnet sind.

5. Turmsegment (200) nach einem der vorherigen Ansprüche, wobei
- das innere Verstärkungsblech (236) und/oder das äußere Verstärkungsblech (212, 226) derart an die Aussparung (208, 222) angrenzt bzw. angrenzen, dass das innere Verstärkungsblech (236) und/oder das äußere Verstärkungsblech (212, 226) im Wesentlichen bündig mit dem Mantelsegment (201) abschließt bzw. abschließen.

6. Turmsegment (200) nach einem der vorherigen Ansprüche, wobei
- der konkave obere Blechabschnitt (214, 228, 238) und/oder der konkave untere Blechabschnitt (216, 230, 240) sichelförmig ausgebildet sind.

7. Turmsegment (200) nach einem der vorherigen Ansprüche, wobei
- der Blechmittenabschnitt (218, 220, 232, 234, 242, 244) des inneren Verstärkungsblechs (236) und/oder des äußeren Verstärkungsblechs (212, 226) einen ersten Blechstreifen und einen zweiten Blechstreifen aufweist,
- die horizontale Beabstandung der zwei Blechstreifen im Wesentlichen der horizontalen Erstreckung der Aussparung (208, 222) entspricht und ihre Enden an zwei voneinander beabstandeten Enden des konvexen oberen Aussparungsabschnitts und des konvexen unteren Aussparungsabschnitts angeordnet sind.

8. Turmsegment (200) nach einem der vorherigen Ansprüche 6 oder 7, wobei
- der konkave obere Blechabschnitt des inneren Verstärkungsblechs (236) und/oder des äußeren Verstärkungsblechs (212, 226) mindestens einen ersten oberen Auskragabschnitt (250, 252) und/oder der konkave untere Blechabschnitt des inneren Verstärkungsblechs (236) und/oder des äußeren Verstärkungsblechs (212, 226) mindestens einen ersten unteren Auskragabschnitt (250, 252) aufweist, der vorzugsweise umgebogen ist,
- sich der erste obere Auskragabschnitt (250, 252) und/oder der erste untere Auskragabschnitt (250, 252) von dem Mantelsegment (201) hinweg erstreckt bzw. erstrecken, und/oder
- der konkave obere Blechabschnitt und/oder der konkave untere Blechabschnitt und/oder der Blechmittenabschnitt separate miteinander verbundene Bauteile sind, die vorzugsweise miteinander verschweißt sind.

9. Turmsegment (200) nach einem der vorherigen Ansprüche, wobei
- das Mantelsegment (201) eine Stärke zwischen 30 mm und 60 mm, insbesondere zwischen 45 mm und 55 mm, aufweist, und/oder
- das Mantelsegment (201) aus Stahl besteht oder Stahl umfasst, und/oder
- das innere Verstärkungsblech (236) und/oder das äußere Verstärkungsblech (212, 226) eine Stärke zwischen 10 mm und 50 mm, vorzugsweise zwischen 20 mm und 45 mm, aufweist.

10. Turmsegment (200) nach einem der vorherigen Ansprüche, wobei
- das innere Verstärkungsblech (236) einstückig ausgebildet und/oder das äußere Verstärkungsblech (212, 226) einstückig ausgebildet ist.

11. Turm (102) einer Windenergieanlage (100), umfassend
- ein Turmsegment (200) nach einem der vorherigen Ansprüche.

12. Windenergieanlage (100), umfassend
- einen Turm (102) nach dem vorherigen Anspruch.

13. Verfahren zur Herstellung eines Turmsegments (200), umfassend die Schritte
- Bereitstellen eines Mantelsegments (201) mit einer Aussparung (208, 222) für eine Tür,
- Anordnen eines inneren Verstärkungsblechs (236) in einem inneren Verstärkungsabschnitt (235) einer inneren, einem Turminneren zugewandten Mantelfläche (206) des Mantelsegments (201) und/oder eines äußeren Verstärkungsblechs (212, 226) in einem äußeren Verstärkungsabschnitt (210, 224) einer äußeren, einem Turminneren abgewandten Mantelfläche (204) des Mantelsegments (201), wobei der innere Verstärkungsabschnitt (235) und/oder der äußere Verstärkungsabschnitt (210, 224) an die Aussparung (208, 222) angrenzen, wobei die Aussparung (208, 222) einen konvexen oberen Aussparungsabschnitt (246) und/oder einen konvexen unteren Aussparungsabschnitt (248) aufweist, und das innere Verstärkungsblech (236) und/oder das äußere Verstärkungsblech (212, 226) einen zu dem konvexen oberen Aussparungsabschnitt (246) korrespondierenden konkaven oberen Blechabschnitt (214, 228, 238) und/oder einen zu dem konvexen unteren Aussparungsabschnitt (248) korrespondierenden konkaven unteren Blechabschnitt (216, 230, 240) aufweist bzw. aufweisen, und die Aussparung (208, 222) einen im Wesentlichen rechteckigen Aussparungsmittenabschnitt aufweist, der vorzugsweise zwischen dem konvexen oberen Aussparungsabschnitt (246) und dem konvexen unteren Aussparungsabschnitt (248) angeordnet ist, und das innere Verstärkungsblech (236) und/oder das äußere Verstärkungsblech (212, 226) einen Blechmittenabschnitt (218, 220, 232, 234, 242, 244) aufweist bzw. aufweisen, wobei der Blechmittenabschnitt (218, 220, 232, 234, 242, 244) an den Aussparungsmittenabschnitt angrenzt, wobei der Blechmittenabschnitt des inneren Verstärkungsblechs (236) und/oder des äußeren Verstärkungsblechs (212, 226) mindestens einen mittleren Auskragabschnitt (250, 252) aufweist, **dadurch gekennzeichnet, dass** der mindestens eine mittlere Auskragabschnitt (250, 252) umgebogen ist und sich von dem Mantelsegment (201) hinweg erstreckt.

## Claims

1. Tower segment (200), in particular for a tower (102) of a wind turbine (100), comprising:
- a casing segment (201) with an inner casing surface (206), an outer casing surface (204) and a cutout (208, 222) for a door, wherein
- the inner casing surface (206) has a first inner reinforcing portion (235) and/or the outer casing surface (204) has an outer reinforcing portion (210, 224), wherein the inner reinforcing portion (235) and/or the outer reinforcing portion (210, 224) adjoins/adjoin the cutout (208, 222), and
- the inner reinforcing portion (235) has an inner reinforcing plate (236) and/or the outer reinforcing portion (210, 224) has an outer reinforcing plate (212, 226), wherein
- the cutout (208, 222) has a convex upper cutout portion (246) and/or a convex lower cutout portion (248), and
- the inner reinforcing plate (236) and/or the outer reinforcing plate (212, 226) has/have a concave upper plate portion (214, 228, 238) corresponding to the convex upper cutout portion (246), and/or a concave lower plate portion (216, 230, 240) corresponding to the convex lower cutout portion (248), and
- the cutout (208, 222) has a substantially rectangular cutout middle portion which is preferably arranged between the convex upper cutout portion (246) and the convex lower cutout portion (248), and
- the inner reinforcing plate (236) and/or the outer reinforcing plate (212, 226) has/have a plate middle portion (218, 220, 232, 234, 242, 244), wherein the plate middle portion (218, 220, 232, 234, 242, 244) adjoins the cutout middle portion, wherein
- the plate middle portion of the inner reinforcing plate (236) and/or the outer reinforcing plate (212, 226) has at least one middle collar portion (250, 252), **characterized in that** the at least one middle collar portion (250, 252) is bent over and extends away from the casing segment (201).

2. Tower segment (200) according to claim 1, wherein
- the inner reinforcing plate (236) and/or the outer reinforcing plate (212, 226) substantially completely surrounds/surround the cutout (208, 222), and/or
- an inner contour and/or an outer contour of the inner reinforcing plate (236) and/or the outer reinforcing plate (212, 226) substantially corresponds/correspond to the geometry of the cutout (208, 222).

3. Tower segment (200) according to any of the preceding claims, wherein
- the inner reinforcing plate (236) and/or the outer reinforcing plate (212, 226) is/are connected, in particular bolted, to the casing segment (201), and
- preferably the casing segment (201), the inner reinforcing plate (236) and the outer reinforcing plate (212, 226) have a plurality of passages with a common passage axis, and fixing elements, in particular bolts, extend through these passages.

4. Tower segment (200) according to any of the preceding claims, wherein
- a first bolt region (254) with two or more bolts and a second bolt region (256) with two or more bolts are provided in an upper plate portion of the inner reinforcing plate (236) and/or the outer reinforcing plate (212, 226) above the cutout (208, 222), and/or in a lower plate portion of the inner reinforcing plate (236) and/or the outer reinforcing plate (212, 226) below the cutout (208, 222), and
- preferably the bolts in the first bolt region (254) are arranged substantially in a sickle shape, and/or the bolts in the second bolt region (256) are arranged substantially in a circle pattern.

5. Tower segment (200) according to any of the preceding claims, wherein
- the inner reinforcing plate (236) and/or the outer reinforcing plate (212, 226) adjoins/adjoin the cutout (208, 222) such that the inner reinforcing plate (236) and/or the outer reinforcing plate (212, 226) terminates/terminate substantially flush with the casing segment (201).

6. Tower segment (200) according to any of the preceding claims, wherein
- the concave upper plate portion (214, 228, 238) and/or the concave lower plate portion (216, 230, 24) are sickle-shaped.

7. Tower segment (200) according to any of the preceding claims, wherein
- the plate middle portion (218, 220, 232, 234, 242, 244) of the inner reinforcing plate (236) and/or the outer reinforcing plate (212, 226) has a first plate strip and a second plate strip,
- the horizontal spacing of the two plate strips corresponds substantially to the horizontal extent of the cutout (208, 222) and their ends are arranged at two mutually spaced ends of the convex upper cutout portion and the convex lower cutout portion.

8. Tower segment (200) according to any of the preceding claims 6 or 7, wherein
- the concave upper plate portion of the inner reinforcing plate (236) and/or the outer reinforcing plate (212, 226) has at least one first upper collar portion (250, 252), and/or the concave lower plate portion of the inner reinforcing plate (236) and/or the outer reinforcing plate (212, 226) has at least one first lower collar portion (250, 252) which is preferably bent over,
- the first upper collar portion (250, 252) and/or the first lower collar portion (250, 252) extends/extend away from the casing segment (201), and/or
- the concave upper plate portion and/or the concave lower plate portion and/or the plate middle portion are separate components which are connected together, preferably welded together.

9. Tower segment (200) according to any of the preceding claims, wherein
- the casing segment (201) has a thickness between 30 mm and 60 mm, in particular between 45 mm and 55 mm, and/or
- the casing segment (201) consists of or comprises steel, and/or
- the inner reinforcing plate (236) and/or the outer reinforcing plate (212, 226) has a thickness between 10 mm and 50 mm, preferably between 20 mm and 45 mm.

10. Tower segment (200) according to any of the preceding claims, wherein
- the inner reinforcing plate (236) is formed integrally and/or the outer reinforcing plate (212, 226) is formed integrally.

11. Tower (102) of a wind turbine (100) comprising
- a tower segment (200) according to any of the preceding claims.

12. Wind turbine (100) comprising
- a tower (102) according to the preceding claim.

13. Method for manufacturing a tower segment (200), comprising the steps
- provision of a casing segment (201) with a cutout (208, 222) for a door,
- arrangement of an inner reinforcing plate (236) in an inner reinforcing portion (235) of an inner casing surface (206) of the casing segment (201) facing the tower interior, and/or of an outer reinforcing plate (212, 226) in an outer reinforcing portion (210, 224) of an outer casing surface (204) of the casing segment (201) facing away from the tower interior, wherein the inner reinforcing portion (235) and/or the outer reinforcing portion (210, 224) adjoin the cutout (208, 222), wherein the cutout (208, 222) has a convex upper cutout portion (246) and/or a convex lower cutout portion (248), and the inner reinforcing plate (236) and/or the outer reinforcing plate (212, 226) has/have a concave upper plate portion (214, 228, 238) corresponding to the convex upper cutout portion (246), and/or a concave lower plate portion (216, 230, 240) corresponding to the convex lower cutout portion (248), and the cutout (208, 222) has a substantially rectangular cutout middle portion which is preferably arranged between the convex upper cutout portion (246) and the convex lower cutout portion (248), and the inner reinforcing plate (236) and/or the outer reinforcing plate (212, 226) has/have a plate middle portion (218, 220, 232, 234, 242, 244), wherein the plate middle portion (218, 220, 232, 234, 242, 244) adjoins the cutout middle portion, wherein the plate middle portion of the inner reinforcing plate (236) and/or the outer reinforcing plate (212, 226) has at least one middle collar portion (250, 252), wherein the at least one middle collar portion (250, 252) is bent over and extends away from the casing segment (201), wherein the plate middle portion of the inner reinforcing plate (236) and/or the outer reinforcing plate (212, 226) has at least one middle collar portion (250, 252), **characterized in that** the at least one middle collar portion (250, 252) is bent over and extends away from the casing segment (201).

## Revendications

1. Segment de mât (200), en particulier pour un mât (102) d'une éolienne (100), comprenant
- un segment enveloppant (201) avec une surface enveloppante intérieure (206), une surface enveloppante extérieure (204) et un évidement (208, 222) pour un mât, dans lequel
- la surface enveloppante intérieure (206) présente une section de renforcement intérieure (235) et/ou la surface enveloppante extérieure (204) présente une section de renforcement extérieure (210, 224), dans lequel la section de renforcement intérieure (235) et/ou la section de renforcement extérieure (210, 224) jouxte ou jouxtent l'évidement (208, 222), et
- la section de renforcement intérieure (235) présente une tôle de renforcement intérieure (236) et/ou la section de renforcement extérieure (210, 224) présente une tôle de renforcement extérieure (212, 226), dans lequel
- l'évidement (208, 222) présente une section d'évidement supérieure convexe (246) et/ou une section d'évidement inférieure convexe (248), et
- la tôle de renforcement intérieure (236) et la tôle de renforcement extérieure (212, 226) présentent une section de tôle supérieure concave (214, 228, 238) correspondant à la section d'évidement supérieure convexe (246) et/ou une section de tôle inférieure concave (216, 230, 240) correspondant à la section d'évidement inférieure convexe (248), et
- l'évidement (208, 222) présente une section centrale d'évidement sensiblement rectangulaire, qui est disposée de préférence entre la section d'évidement supérieure convexe (246) et la section d'évidement inférieure convexe (248), et
- la tôle de renforcement intérieure (236) et/ou la tôle de renforcement extérieure (212, 226) présente ou présentent une section centrale de tôle (218, 220, 232, 234, 242, 244), dans lequel la section centrale de tôle (218, 220, 232, 234, 242, 244) jouxte la section centrale d'évidement, dans lequel
- la section centrale de tôle de la tôle de renforcement intérieure (236) et/ou de la tôle de renforcement extérieure (212, 226) présente au moins une section en porte-à-faux centrale (250, 252), **caractérisé en ce que** l'au moins une section en porte-à-faux centrale (250, 252) est cintrée et s'étend de manière à s'éloigner du segment enveloppant (201).

2. Segment de mât (200) selon la revendication 1, dans lequel
- la tôle de renforcement intérieure (236) et/ou la tôle de renforcement extérieure (212, 226) entoure ou entourent sensiblement en totalité l'évidement (208, 222), et/ou
- un contour intérieur et/ou un contour extérieur de la tôle de renforcement intérieure (236) et/ou de la tôle de renforcement extérieure (212, 226) correspond ou correspondent sensiblement à la géométrie de l'évidement (208, 222).

3. Segment de mât (200) selon l'une quelconque des revendications précédentes, dans lequel
- la tôle de renforcement intérieure (236) et/ou la tôle de renforcement extérieure (212, 226) est reliée ou sont reliées, en particulier est vissée ou sont vissées, au segment enveloppant (201), et
- de préférence le segment enveloppant (201), la tôle de renforcement intérieure (236) et la tôle de renforcement extérieure (212, 226) présentent une pluralité de passages avec un axe de passage commun, et des éléments de fixation, en particulier des vis, s'étendent à travers lesdits passages de part en part.

4. Segment de mât (200) selon l'une quelconque des revendications précédentes, dans lequel
- une première zone à vis (254) avec deux vis ou plus et une deuxième zone à vis (256) avec deux vis ou plus sont prévues dans une section de tôle supérieure de la tôle de renforcement intérieure (236) et/ou de la tôle de renforcement extérieure (212, 226) au-dessus de l'évidement (208, 222) et/ou dans une section de tôle inférieure de la tôle de renforcement intérieure (236) et/ou de la tôle de renforcement extérieure (212, 226), sous l'évidement (208, 222), et
- de préférence les vis sont disposées sensiblement en forme de croissant dans la première zone à vis (254) et/ou les vis sont disposées en forme de cercle dans la deuxième zone à vis (256).

5. Segment de mât (200) selon l'une quelconque des revendications précédentes, dans lequel
- la tôle de renforcement intérieure (236) et/ou la tôle de renforcement extérieure (212, 226) jouxte ou jouxtent de telle manière l'évidement (208, 222) que la tôle de renforcement intérieure (236) et/ou la tôle de renforcement extérieure (212, 226) se terminent sensiblement en affleurement avec le segment enveloppant (201) .

6. Segment de mât (200) selon l'une quelconque des revendications précédentes, dans lequel
- la section de tôle supérieure concave (214, 228, 238) et/ou la section de tôle inférieure concave (216, 230, 240) sont réalisées en forme de croissant.

7. Segment de mât (200) selon l'une quelconque des revendications précédentes, dans lequel
- la section centrale de tôle (218, 220, 232, 234, 242, 244) de la tôle de renforcement intérieure (236) et/ou de la tôle de renforcement extérieure (212, 226) présente une première bande de tôle et une deuxième bande de tôle,
- l'espacement horizontal des deux bandes de tôle correspond sensiblement à l'extension horizontale de l'évidement (208, 222) et leurs extrémités sont disposées sur deux extrémités espacées l'une de l'autre de la section d'évidement supérieure convexe et de la section d'évidement inférieure convexe.

8. Segment de mât (200) selon l'une quelconque des revendications 6 ou 7, dans lequel
- la section de tôle supérieure concave de la tôle de renforcement intérieure (236) et/ou de la tôle de renforcement extérieure (212, 226) présente au moins une première section en porte-à-faux supérieure (250, 252) et/ou la section de tôle inférieure concave de la tôle de renforcement intérieure (236) et/ou de la tôle de renforcement extérieur (212, 226) présente au moins une première section en porte-à-faux inférieure (250, 252), qui est de préférence repliée,
- la première section en porte-à-faux supérieure (250, 252) et/ou la première section en porte-à-faux inférieure (250, 252) s'étend ou s'étendent de manière à s'éloigner du segment enveloppant (201), et/ou
- la section de tôle supérieure concave et/ou la section de tôle inférieure concave et/ou la section centrale de tôle sont des composants séparés reliés les uns aux autres, qui sont de préférence soudés les uns aux autres.

9. Segment de mât (200) selon l'une quelconque des revendications précédentes, dans lequel
- le segment enveloppant (201) présente une épaisseur entre 30 mm et 60 mm, en particulier entre 45 mm et 55 mm, et/ou
- le segment enveloppant (201) est constitué d'acier ou comprend de l'acier, et/ou
- la tôle de renforcement intérieure (236) et/ou la tôle de renforcement extérieure (212, 226) présente ou présentent une épaisseur entre 10 mm et 50 mm, de préférence entre 20 mm et 45 mm.

10. Segment de mât (200) selon l'une quelconque des revendications précédentes, dans lequel
- la tôle de renforcement intérieure (236) est réalisée d'un seul tenant et/ou la tôle de renforcement extérieure (212, 226) est réalisée d'un seul tenant.

11. Mât (102) d'une éolienne (100), comprenant
- un segment de mât (200) selon l'une quelconque des revendications précédentes.

12. Eolienne (100) comprenant
- un mât (102) selon la revendication précédente.

13. Procédé de fabrication d'un segment de mât (200), comprenant les étapes
- de fourniture d'un segment enveloppant (201) avec un évidement (208, 222) pour une porte,
- de disposition d'une tôle de renforcement intérieure (236) dans une section de renforcement intérieure (235) d'une surface enveloppante intérieure (206), tournée vers l'intérieur de mât, du segment enveloppant (201) et d'une tôle de renforcement extérieure (212, 226) dans une section de renforcement extérieure (210, 224) d'une surface enveloppante extérieure (204), opposée à l'intérieur de mât, du segment enveloppant (201), dans lequel la section de renforcement intérieure (235) et/ou la section de renforcement extérieure (210, 224) jouxtent l'évidement (208, 222), dans lequel l'évidement (208, 222) présente une section d'évidement supérieure convexe (246) et/ou une section d'évidement inférieure convexe (248), et la tôle de renforcement intérieure (236) et/ou la tôle de renforcement extérieure (212, 226) présente ou présentent une section de tôle supérieure concave (214, 228, 238) correspondant à la section d'évidement supérieure convexe (246) et/ou une section de tôle inférieure concave (216, 230, 240) correspondant à la section d'évidement inférieure convexe (248), et l'évidement (208, 222) présente une section centrale d'évidement sensiblement rectangulaire, qui est disposée de préférence entre la section d'évidement supérieure convexe (246) et la section d'évidement inférieure convexe (248), et la tôle de renforcement intérieure (236) et/ou la tôle de renforcement extérieure (212, 226) présente ou présentent une section centrale de tôle (218, 220, 232, 234, 242, 244), dans lequel la section centrale de tôle (218, 220, 232, 234, 242, 244) jouxte la section centrale d'évidement, dans lequel la section centrale de tôle de la tôle de renforcement intérieure (236) et/ou de la tôle de renforcement extérieure (212, 226) présente au moins une section en porte-à-faux centrale (250, 252), **caractérisé en ce que**
l'au moins une section en porte-à-faux centrale (250, 252) est repliée et s'étend de manière à s'éloigner du segment enveloppant (201).
